# DEMANDE DE BREVET EUROPEEN

(11) **EP 0 890 727 A1**
(43) Date de publication de la demande: **13.01.1999**
(21) Numéro de dépôt: 98401735.0
(22) Date de dépôt: 09.07.1998
(51) Int. Cl.: F02K 1/76, B64D 29/06

(54) **Inverseur de poussée résistante aux impacts**

(30) Priorité: 10.07.1997 FR 9708762
(71) Demandeur: Hispano-Suiza Aérostructures, 76700 Gonfreville l'Orcher (FR)
(72) Inventeur: Gonidec, Patrick, 76290 Montivilliers (FR); Rouyer, Pascal, Gérard, 76430 Saint Aubin Routot (FR); Vauchel, Guy, Bernard, 76610 Le Havre (FR); Baudu, Pierre, André, Marcel, 76600 Le Havre (FR)

(57) **Abrégé**

L'invention propose un inverseur de poussée pour turbomoteur d'aéronef spécialement conçu pour résister aux impacts d'objets provenant des turbomoteurs autour desquels ils sont disposés, tels des bris d'aubes ou de disques, ces impacts étant susceptibles de déformer la structure annulaire de l'inverseur ou d'en rompre les raidisseurs.

Un tel inverseur est remarquable en ce que les systèmes de verrouillage de secours (35) comportent chacun un pêne articulé (38) dont une extrémité est en forme de crochet (40) entourant partiellement l' interface de verrouillage (43), le pêne (38) étant rappelé automatiquement à la fermeture par des moyens élastiques (47). Une telle disposition permet de créer des liaisons mécaniques supplémentaires susceptibles de suppléer aux déformations de la structure annulaire de l'inverseur ou aux ruptures des raidisseurs.

## Description

l'invention se rapporte aux inverseurs de poussée pour turbomoteur d'aéronef, et plus particulièrement à de tels inverseurs spécialement conçus pour résister aux impacts d'objet provenant des turbomoteurs autour desquels ils sont disposés.

Les inverseurs de poussée pour aéronef sont des dispositifs bien connus permettant d'inverser la direction du flux de gaz de propulsion généré par le turbomoteur propulsant l'aéronef, afin de ralentir ledit aéronef.

Les inverseurs de poussée comportent une structure annulaire entourant le turbomoteur. Cette structure annulaire comporte elle-même une première partie ou structure fixe traversée par une pluralité d'ouvertures radiales, et une seconde partie constituée par au moins un obturateur mobile venant fermer les ouvertures radiales. Lorsque les ouvertures radiales sont fermées₁ le flux de gaz de propulsion généré par le turbomoteur est canalisé vers l'arrière afin de propulser l'aéronef. Lorsque les ouvertures radiales sont ouvertes, le flux de gaz de propulsion passe par lesdites ouvertures et revient vers l'avant afin de ralentir l'aéronef. Une grande sécurité est requise dans le maintien des obturateurs en position fermée. C'est pourquoi chaque obturateur est maintenu fermé par au moins un système de verrouillage principal et au moins un système de verrouillage de secours chargé de maintenir l'obturateur fermé malgré la défaillance du système de verrouillage principal. Par le terme "système de verrouillage", on entend un verrou monté sur une partie de la structure annulaire, ledit verrou coopérant avec une interface de verrouillage montée sur l'autre partie de la structure annulaire. Habituellement mais non obligatoirement, le verrou est monté sur la structure fixe et l'interface de verrouillage est monté sur l'obturateur.

On peut classer les inverseurs en deux grandes catégories. Dans une première catégorie, les obturateurs sont montés pivotants dans les ouvertures radiales Dans la seconde catégorie, un obturateur annulaire unique entoure la structure fixe de l'inverseur et recouvre les ouvertures radiales, l'ouverture étant obtenue par une translation vers l'arrière dudit obturateur.

La structure annulaire de l'inverseur est délimitée radialement par deux parois minces, soit une paroi intérieure canalisant le flux de gaz de propulsion précité, et une paroi extérieure contre laquelle s'écoule l'air ambiant. Ces parois sont reliées entre elles par des raidisseurs, ce qui permet d'assurer la rigidité et la cohésion de l'inverseur malgré sa légèreté. Les systèmes de verrouillage sont habituellement montés sur les raidisseurs de la structure fixe et des obturateurs.

Les raidisseurs de la structure fixe constituent naturellement une structure complexe. Ils comportent un premier anneau rigide ou cadre avant, un second anneau rigide ou cadre arrière et une pluralité de poutres longitudinales solidaires par leurs extrémités au cadre avant et au cadre arrière, les ouvertures radiales étant disposées entre les poutres longitudinales. On connait aussi des inverseurs de poussée ne comportant pas de cadre arrière, les portes longitudinales étant en conséquence rattachées au cadre avant par leur extrémité avant, alors que leur extrémité arrière reste libre.

Bien que très rares, les accidents sur le turbomoteur peuvent endommager dangereusement l'inverseur. Ainsi, une aube de rotor, voire un disque de rotor peut se rompre. Sous l'effet de la force centrifuge de rotation, les débris peuvent alors impacter l'inverseur.

Les dommages ainsi causés peuvent être limités à des déformations plus ou moins localisées de la structure annulaire de l'inverseur, et donc de ses raidisseurs. Cette déformation peut cependant rendre inopérant un système de verrouillage du fait de l'écartement mutuel du verrou et de l'interface de verrouillage qui en résulte, ce qui peut provoquer alors l'ouverture intempestive de l'obturateur. Une premier problème est en conséquence de maintenir les obturateurs fermés malgré la déformation de la structure annulaire de l'inverseur.

Plus gravement, les dommages peuvent provoquer la rupture d'un raidisseur, notamment du cadre avant, mais aussi d'une poutre longitudinale ou du cadre arrière, ce qui peut alors provoquer la décohésion de l'inverseur. Un second problème est en conséquence d'empêcher la décohésion de l'inverseur en cas de rupture d'un raidisseur.

Par ailleurs, le contrôle du bon verrouillage des obturateurs repose sur des moyens de détection et de signalisation électriques associés aux éléments mécaniques commandant le verrouillage. Ces moyens peuvent eux aussi tomber en panne ou émettre de faux signaux de verrouillage. Ceci peut occasionner une situation dangereuse et cependant indétectable lorsque l'aéronef est au sol et s'apprête à décoller, les obturateurs étant fermés mais non verrouillés. Un troisième problème est de signaler de façon fiable au soi la fermeture des systèmes de verrouillage.

L'invention propose un inverseur de poussée pour aéronef comportant notamment une structure annulaire entourant le turbomoteur, cette structure annulaire comportant une première partie ou structure fixe qui est traversée radialement par au moins une ouverture radiale, cette structure annulaire comportant aussi au moins une seconde partie mobile ou obturateur venant fermer ou dégager lesdites ouvertures radiales, cet inverseur comportant des moyens de verrouillage principaux de l'obturateur et au moins un système de verrouillage de secours reliant la structure fixe et l'obturateur lorsque ledit obturateur est fermé, ce système de verrouillage comportant un verrou solidaire d'une partie de la structure annulaire, ce verrou comportant un pêne pivotant à une extrémité sur une articulation, ce pêne coopérant par son autre extrémité libre avec une interface de verrouillage solidaire de l'autre partie, ledit système de verrouillage de secours comportant aussi des moyens d'actionnement du pêne à l'ouverture.

Un tel inverseur de poussée est remarquable en ce que :
a) il comporte des moyens élastiques rappelant automatiquement à la fermeture le pêne des systèmes de verrouillage de secours,
b) l'extrémité libre du pêne comporte un crochet dans un plan perpendiculaire à l'articulation du pêne, l'interface de verrouillage étant susceptible de passer par l'ouverture dudit crochet lorsque le pêne se referme alors que l'obturateur est lui-même fermé,
c) le crochet entoure partiellement l'interface de verrouillage lorsque le pêne est en position fermée alors que l'obturateur est lui-même fermé.

On comprend que lorsque l'obturateur est fermé, les moyens élastiques maintiennent le pêne au voisinage de l'interface de verrouillage, celle-ci se trouvant partiellement entourée par le crochet. Une telle disposition a pour effet de retenir par le pêne l'interface de verrouillage par rapport au verrou quelque soit la direction dans laquelle ladite interface tend à se déplacer dans un plan perpendiculaire à l'articulation du pêne, du fait de la déformation de la structure annulaire ou de la rupture d'un raidisseur car :
- Cette rétention s'effectue naturellement de par la forme du crochet lorsque la direction du déplacement de l'interface de verrouillage et opposée à l'articulation du pêne et peu inclinée par rapport à une ligne fictive joignant l'articulation à ladite interface de verrouillage.
- Cette rétention s'accompagne d'un pivotement du crochet autour de l'articulation lorsque la direction du déplacement de l'interface de verrouillage est fortement inclinée par rapport à la ligne fictive joignant l'articulation du pêne à l'interface de verrouillage, cette inclinaison tendant d'ailleurs à se résorber du fait du pivotement du crochet.
- Dans les cas extrêmes, l'interface de verrouillage peut même se rapprocher de l'articulation. Toutefois les moyens élastiques maintenant le pêne au voisinage de l'interface de verrouillage, le crochet restera en mesure d'assurer la rétention de l'interface de verrouillage lorsque celle-ci tendra de nouveau à s'éloigner de l'articulation.

L'invention permet en conséquence de maintenir l'obturateur fermé :
- malgré la mise hors service des moyens de verrouillage principaux,
- et malgré les déformations de la structure annulaire ou la rupture des raidisseurs. Dans ce dernier cas, la présente invention a aussi pour effet de créer des liaisons supplémentaires entre la structure fixe et les obturateurs lorsque les crochets des pênes retiennent les interfaces de verrouillage. Ainsi, en cas de déformation de la structure annulaire ou de rupture d'un raidisseur, les obturateurs qui sont alors mis en contrainte coopèrent avec la structure fixe pour maintenir la cohésion de l'inverseur.

On remarquera que l'invention présente aussi l'avantage d'une grande fiabilité et celui de pouvoir être mis en oeuvre simplement.

Avantageusement, l'articulation du pêne sera sensiblement orthogonale à la ligne de démarcation entre la structure fixe et l'obturateur au voisinage du pêne, afin de s'opposer à l'écartement de l'obturateur et de la structure fixe à cet endroit.

Avantageusement, on disposera un jeu E entre le crochet et l'interface de verrouillage. Ceci a pour effet de supprimer tout frottement entre le crochet et l'interface de verrouillage pendant l'action des moyens de rappel élastiques du pêne à la fermeture, et pour résultat de pouvoir rappeler le pêne vers la position fermée avec un couple réduit, ce qui permet de rendre très fiable le rappel élastique et automatique du pêne à la fermeture.

Avantageusement encore, l'interface de verrouillage sera constituée par un galet pivotant, afin de réduire les frottements avec le crochet lorsque ladite interface de verrouillage tend à se déplacer, ce qui facilite le pivotement du pêne autour de son articulation et réduit l'effort de rétention à fournir.

Avantageusement, les systèmes de verrouillage de secours seront disposés contre une paroi délimitant radialement la structure annulaire de l'inverseur, l'articulation du pêne et l'interface de verrouillage étant sensiblement équidistants de ladite paroi, c'est à dire la ligne fictive joignant l'articulation à l'interface de verrouillage est sensiblement parallèle à cette paroi lorsque l'obturateur est fermé à cet endroit. Ceci a pour effet de faire reprendre l'effort de verrouillage par la paroi suivant une direction sensiblement tangente à cette paroi, et pour résultat de créer des liaisons supplémentaires entre la partie de la paroi composant la structure fixe et la partie de la paroi composant l'obturateur, lorsque les raidisseurs de l'inverseur sont déformés ou rompus suite à l'éclatement d'un disque du turbomoteur, ce qui permet à cette paroi de maintenir la cohésion de l'inverseur et de suppléer ainsi à l'affaiblissement des raidisseurs. On notera que le système de verrouillage de secours peut être lié directement à la paroi, ou bien lié à un raidisseur lui-même lié à la paroi.

Si on appelle D la distance entre l'articulation et l'interface de verrouillage, et H la distance de l'articulation et de l'interface de verrouillage avec la fibre neutre de la paroi, le rapport D/H devrait être au moins égal à 3 pour réduire la composante normale à la paroi de l'effort imposé à la structure. On choisira de préférence un rapport de l'ordre de 4 à 6 afin de rendre négligeable ladite composante normale. On notera que le fait de réduire H, et donc d'augmenter le rapport D/H, permet aussi de réduire le moment de flexion créé sur la paroi par ledit effort imposé.

Avantageusement, dans le cas d'inverseurs du type dit "à portes", au moins un système de verrouillage de secours selon l'invention sera disposé latéralement de chaque côté des portes, l'ensemble des systèmes de verrouillages de secours étant sensiblement orientés et alignés selon une circonférence de l'inverseur, c'est à dire se trouvant dans un plan perpendiculaire à l'axe géométrique du turbomoteur, les articulations des pênes étant en conséquence sensiblement orthogonales à ladite circonférence. Une telle disposition a pour effet de positionner les efforts de verrouillage en traction le long de cette circonférence. Du fait que l'inverseur a une forme sensiblement de révolution autour du turbomoteur, cette disposition est particulièrement efficace pour faire reprendre par la paroi délimitant radialement l'inverseur les efforts de verrouillage, ce qui permet de maintenir la cohésion de l'inverseur malgré la déformation de la structure annulaire ou la rupture de ses raidisseurs.

Avantageusement aussi, le pêne en position ouverte émergera en partie de la paroi délimitant radialement la structure annulaire de l'inverseur contre laquelle il est disposé. Une telle disposition a pour effet de rendre le pêne visible lorsqu'il est ouvert, depuis l'extérieur de la structure annulaire de l'inverseur et pour résultat de permettre un contrôle visuel au sol du bon verrouillage des systèmes de verrouillage de secours. Au contraire des dispositifs habituels de détection et de signalisation de verrouillage, la présente invention est à la fois totalement fiable, simple et ne risque pas de générer de faux signaux.

Dans un mode de réalisation préféré, le pêne ne dépassera pas de la paroi délimitant radialement la structure annulaire de l'inverseur lorsqu'il est en position fermée. Cette disposition a pour effet de masquer le pêne dans cette position et pour résultat de permettre un contrôle visuel du verrouillage plus commode par tout ou rien : Le pêne est visible en position ouverte et masqué en position fermée.

Avantageusement aussi, les verrous comporteront chacun une gâchette maintenant le pêne en position ouverte, ladite gâchette étant déclenchée par l'interface de verrouillage lorsque l'obturateur se referme. Du fait de la coopération des moyens élastiques de rappel automatique du pêne à la fermeture avec ladite gâchette, une telle disposition a pour effet d'asservir sans l'appoint de moyens extérieurs aux verrous la fermeture desdits verrous à celle des obturateurs, et pour résultat d'empêcher d'une façon particulièrement fiable la fermeture de chaque verrou tant que l'obturateur correspondant n'est pas lui-même fermé. Une telle disposition a aussi pour avantage de permettre très simplement le maintien des pênes en position ouverte, sans l'appoint de moyens extérieurs.

L'invention sera mieux comprise et les avantages qu'elle procure apparaîtront plus clairement au vu de quelques exemples détaillés de réalisation et des figures annexées :
- la figure 1 illustre une nacelle complète vue de l'extérieur, avec un inverseur à obturateurs basculants du type dits "à portes",
- la figure 2 illustre par une vue en coupe longitudinale ce même inverseur, l'axe géométrique ayant été rapproché de la partie représentée de l'inverseur,
- la figure 3 illustre la disposition d'un système de verrouillage de secours en position fermée à l'avant d'un obturateur basculant,
- La figure 4 illustre en agrandi ce même système de verrouillage,
- la figure 5 illustre la disposition de ce même système de verrouillage en position ouverte, l'obturateur basculant étant lui-même entrouvert,
- la figure 6 illustre par une vue extérieure la disposition des systèmes de verrouillage de secours sur les flancs des portes et selon une circonférence de l'inverseur,
- la figure 7 illustre par une coupe transversale la disposition des système de verrouillage de secours le long de la circonférence de l'inverseur,
- la figure 8 illustre un mode de commande synchronisé des systèmes de verrouillage de secours,
- la figure 9 illustre un mode de commande synchronisé et redondant des systèmes de verrouillage de secours,
- la figure 10 illustre un autre mode de commande synchronisé des systèmes de verrouillage de secours,
- la figure 11 illustre un autre mode de commande synchronisé et redondant des systèmes de verrouillage de secours,
- la figure 12 illustre par une vue en coupe transversale la disposition et le commande synchronisée de deux systèmes de verrouillage sur les flancs d'une porte,
- la figure 13 illustre par une vue en coupe longitudinale la disposition d'un système de verrouillage à l'arrière d'une porte, le verrou étant disposé sur le cadre arrière,
- la figure 14 illustre par une vue en coupe longitudinale ce même système de verrouillage, le verrou étant disposé à l'arrière de la porte,
- la figure 15 illustre un système de verrouillage avec ses moyens élastiques de rappel automatique du pêne vers la position fermée,
- la figure 16 illustre ce même système de verrouillage, les moyens élastiques de rappel automatique du pêne à la fermeture étant complétés par une fonction de bascule,
- la figure 17 illustre un système de verrouillage de secours en position ouverte avec déclenchement intégré à la fermeture de l'obturateur,
- la figure 18 illustre ce même système de verrouillage de secours en position fermée,
- la figure 19 illustre la disposition des systèmes de verrouillage de secours sur un inverseur du type "à grille".

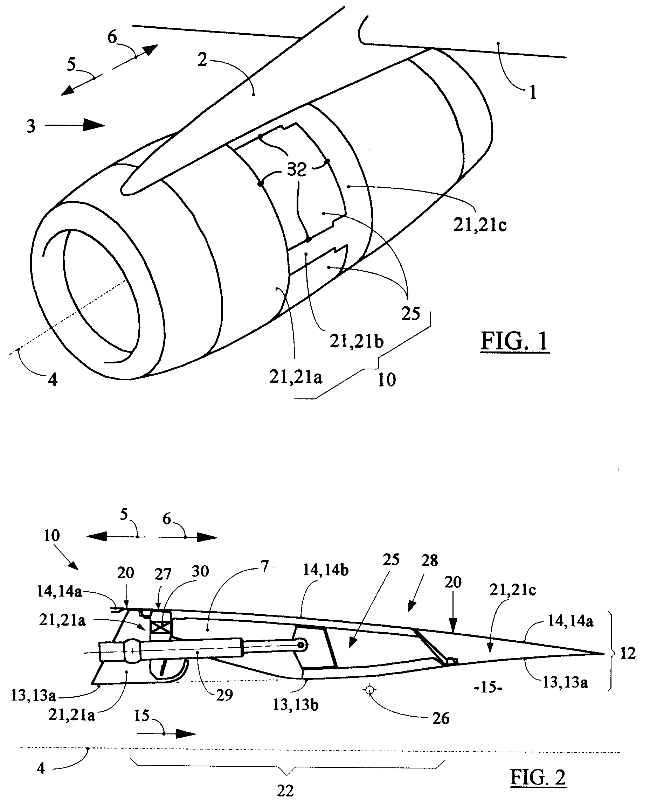

On se reportera en premier lieu à la figure 1. Sous l'aile 1 de l'avion non représenté, un pylône 2 maintient une nacelle 3 entourant le turbomoteur non représenté d'axe géométrique 4. La nacelle 3 a une forme sensiblement annulaire selon l'axe géométrique 4. On notera 5 la direction vers l'avant et 6 la direction vers l'arrière. L'inverseur de poussée 10 constitue la partie arrière de la nacelle 3.

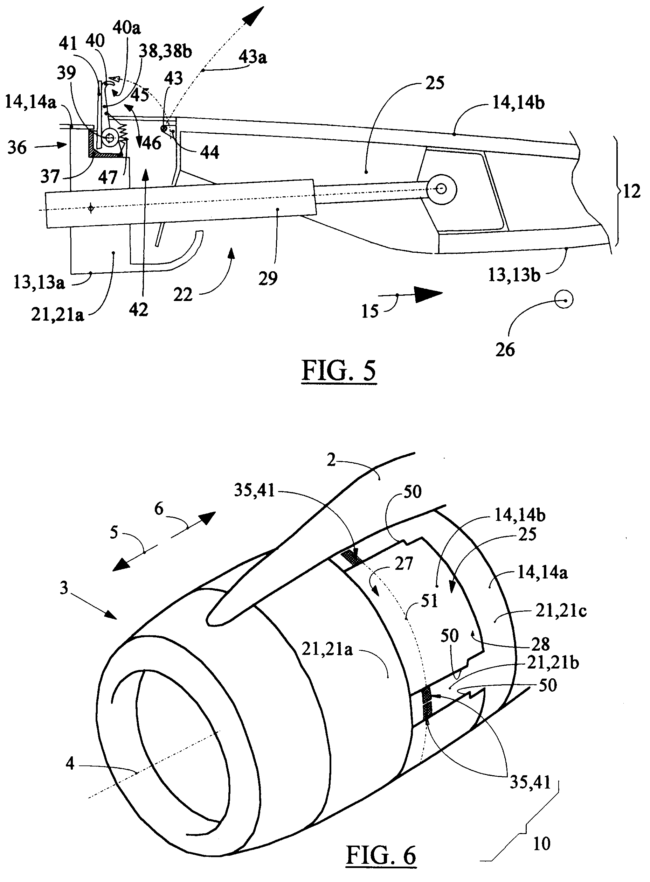

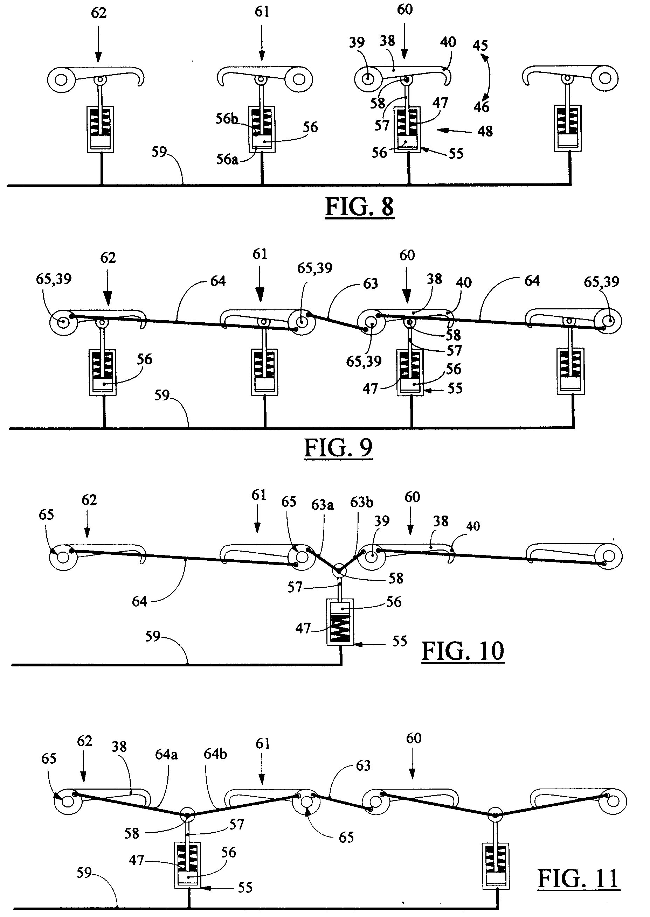

On se reportera maintenant à la figure 2. L'inverseur de poussée 10 comporte une structure annulaire 12 ayant une forme sensiblement de révolution autour de l'axe géométrique 4. La structure annulaire 12 est délimitée radialement par une paroi intérieure mince 13 et une paroi extérieure mince 14. La paroi intérieure 13 entoure et guide vers l'arrière 6 le flux de gaz de propulsion 15 généré par le turbomoteur non représenté.
La structure annulaire 12 comporte une première partie 20 appelée structure fixe, ladite structure fixe 20 comportant elle-même des raidisseurs 21 solidaires des parties fixes 13a et 14a des parois 13 et 14, lesdits raidisseurs 21 coopérant avec lesdites parties fixes 13a et 14a des parois 13 et 14 pour assurer la rigidité et la cohésion de la structure fixe 20. Les raidisseurs 21 sont habituellement un cadre avant 21a en forme d'anneau centré sur l'axe géométrique 4, une pluralité de poutres longitudinales, référencées 21b sur les figures 6 et 11, lesdites poutres longitudinale 21b étant sensiblement parallèles à l'axe géométrique 4 et solidaires par leur extrémité avant au cadre avant 21a, et dans certains types d'inverseurs, un cadre arrière 21c en forme d'anneau centré sur l'axe géométrique 4, les poutres longitudinales référencées 21b sur les figures 6 et 11 étant sensiblement parallèles à l'axe géométrique 4 et solidaires par leur extrémité avant au cadre avant 21a, et solidaires par leur extrémité arrière au un cadre arrière 21c lorsque il y en a un. On remarquera qu'en l'absence de cadre arrière 21c, les poutres longitudinales ne sont tenues que par leur extrémité avant sur le cadre avant 21a. La structure fixe 20 comporte aussi une pluralité d'ouvertures radiales 22 disposées entre le cadre avant 21a, le cadre arrière 21c et les poutres longitudinales. la structure annulaire 12 comporte au moins une seconde partie 25 constituée par des obturateurs mobiles venant fermer les ouvertures radiales 22. Dans cet exemple, les obturateurs 25 sont basculants et sont appelés "portes". De tels obturateurs 25 sont habituellement montés sur des pivots 26, le basculement étant une simple rotation sur ces pivots 26. Ces obturateurs 25 peuvent être aussi montés sur un jeu de bielles non représenté, le basculement se faisant alors selon un mouvement plus complexe, mais sans incidence sur la présente invention. On référencera 27 et 28 respectivement la partie avant et la partie arrière de 1'obturateur 25. L'obturateur est actionné à l'ouverture et à la fermeture par des moyens de commande 29 constitués dans cet exemple par un vérin hydraulique articulé à une extrémité sur le cadre avant 21a et à son autre extrémité sur l'obturateur 25. On référencera 13a et 14a la partie des parois 13 et 14 appartenant à la structure fixe 20. On référencera également 13b et 14b la partie des parois 13 et 14 appartenant à l'obturateur 25. Lorsque l'obturateur 25 est fermé, les parties de parois 13b et 14b sur l'obturateur 25 sont dans l'alignement respectivement des parties de parois 13a, 14a sur la structure fixe 20. La structure annulaire 12 de l'inverseur 10 comporte aussi des moyens de verrouillage 30 permettant de maintenir l'obturateur 25 dans sa position fermée sans l'intervention des moyens de commande 29. Ces moyens de verrouillage 30 sont habituellement mais non obligatoirement disposés entre la partie avant 27 de l'obturateur 25 et le cadre avant 21a.

On se reportera de nouveau à la figure 1 et on référencera 32 la ligne de démarcation entre la structure fixe 21 et chaque obturateur 25.

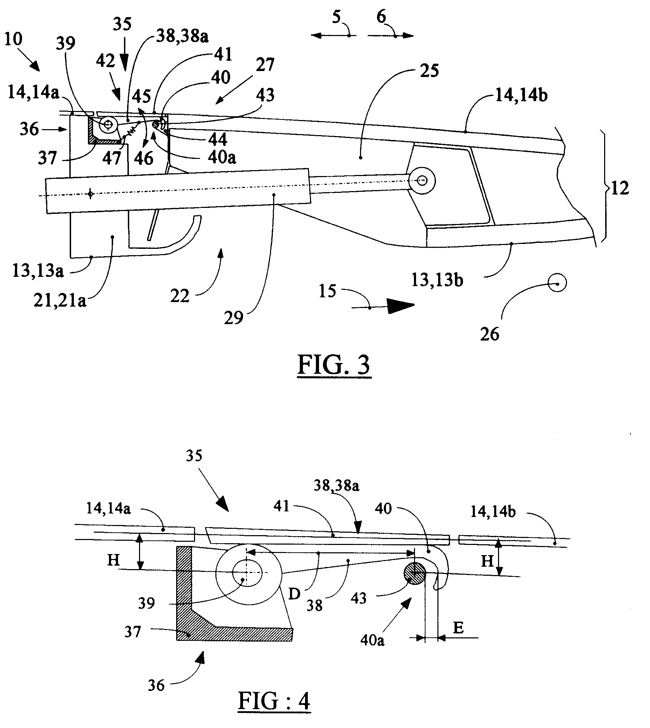

On se reportera maintenant simultanément aux figures 3 et 4. L'obturateur 25 est en position fermée. Dans cet exemple, un système de verrouillage de secours 35 est disposé contre la paroi extérieure 14 entre le cadre avant 21a et l'extrémité avant 27 de 1'obturateur 25. Le système de verrouillage de secours 35 comporte un verrou 36 comportant lui même une chape 37 et un pêne 38 de forme générale allongée monté par une extrémité sur la chape 37 par l'intermédiaire d'une articulation 39, alors que l'extrémité libre du pêne 38 comporte un crochet 40 dont on notera 40a l'ouverture, ledit pêne 38 comportant aussi un cache 41 susceptible d'être inscrit dans une ouverture 42 pratiquée dans la paroi extérieure 14. Dans cet exemple, le cache 41 est une simple plaque. Le système de verrouillage de secours 35 comporte aussi une interface de verrouillage 43 constituée dans cet exemple par un galet 43 maintenu par un tirant 44 à l'extrémité avant 27 de l'obturateur 25. On notera 45 le sens de l'ouverture du pêne 38 et 46 le sens de la fermeture du pêne 38. Des moyens élastiques de rappel automatique 47 tirent le pêne 38 dans le sens de la fermeture 46 et amènent automatiquement ledit pêne 38 au voisinage de l'interface de verrouillage 43.

Les moyens élastiques de rappel automatique 47 peuvent être par exemple constitués par un ressort 47 entre le pêne 38 et la chape 37, ce ressort pouvant agir en traction comme représenté sur la figure, ou en torsion si le ressort 47 entoure l'articulation 39. L'ouverture 40a du crochet 40 étant tournée dans le sens de la fermeture 46 et vers l'articulation 39, le crochet 40 entoure partiellement l'interface de verrouillage 43 avec un jeu E. Dans cette position fermée 38a du pêne 38, le cache 41 est dans l'ouverture 42 de la paroi extérieure 14 et disposé dans l'alignement de cette paroi 14 afin d'en assurer la continuité aérodynamique.

On comprend que dans cette position, grâce à la coopération entre le crochet 40 et les moyens élastiques de rappel automatique 47, le pêne 38 reste au voisinage de l'interface de verrouillage 43 et reste donc en mesure de retenir ladite interface de verrouillage 43 dès qu'elle tendra à s'écarter de l'articulation 39, au jeu E près, malgré les déformations de la structure annulaire 12.

On notera D la distance entre l'articulation 39 du pêne 38 et l'interface de verrouillage 43 coopérant avec ce pêne 38, et H la distance moyenne de l'articulation 39 et de l'interface de verrouillage 43 avec la "fibre neutre" de la paroi extérieure 14, le terme "fibre neutre" étant pris au sens de résistance des matériaux et correspondant sensiblement à une surface fictive équidistante de chaque face de la paroi 14. Le rapport D/H est dans cet exemple voisin de 5. Ainsi, en cas de déverrouillage accidentel de l'obturateur 25, de déformation ou de rupture du cadre avant 21a, la paroi 14 reprendra avec un couple parasite réduit une partie de l'effort de retenue du système de verrouillage de secours 35.

Le pêne 38 peut arriver directement en butée sur l'interface de verrouillage 43, ou arriver par exemple par l'intermédiaire du cache 41 en butée sur un élément de l'obturateur 25. Ainsi dans les deux cas, le pêne 38 en position fermée 38a suivra les déplacements de l'interface de verrouillage 43 sous l'effet des moyens élastiques de rappel automatique 47, ledit pêne 38 en position fermée 38a restant en mesure de retenir l'interface de verrouillage 43 lorsqu'elle tendra à s'écarter du verrou 36.

On comprend aussi que la fermeture et le verrouillage effectif de l'obturateur 25 sont rendus bien visibles de l'extérieur par l'alignement des parties 14a et 14b de la paroi 14 entre elles et avec le cache 41.

On se reportera maintenant à la figure 5. On référencera 43a la trajectoire suivie par l'interface de verrouillage 43 par rapport au verrou 36 lorsque l'obturateur 25 s'ouvre. L'obturateur 25 est entrouvert et le pêne 38 est en position ouverte 38b et émerge partiellement de la paroi extérieure 14. On comprend que dans cette position, le pêne 38, 38b est maintenant bien visible de l'extérieur, ce qui signale le non verrouillage de l'obturateur 25.

On se reportera maintenant à la figure 6. Cet inverseur du type dit "à portes" comporte une pluralité d'obturateurs 25 basculants appelés dans ce cas "portes". Une circonférence géométrique 51, sur la paroi extérieure 14 et centrée sur l'axe géométrique 4 est inscrite dans un plan perpendiculaire audit axe géométrique 4 et passe par les extrémités avant 27 desdits obturateurs 25, ainsi que par les flancs 50 desdits obturateurs 25. Les systèmes de verrouillage de secours 35 avec leurs caches 41 de forme rectangulaire sont disposés sur les flancs 50 des obturateurs 25, de préférence vers la partie avant 27 ou arrière 28 desdits obturateurs 25, lesdits systèmes de verrouillage de secours 35 étant aussi sensiblement alignés suivant la circonférence géométrique 51. Par le terme "aligné" on entend le fait que chaque pêne 38 est sensiblement disposé selon cette circonférence 51.

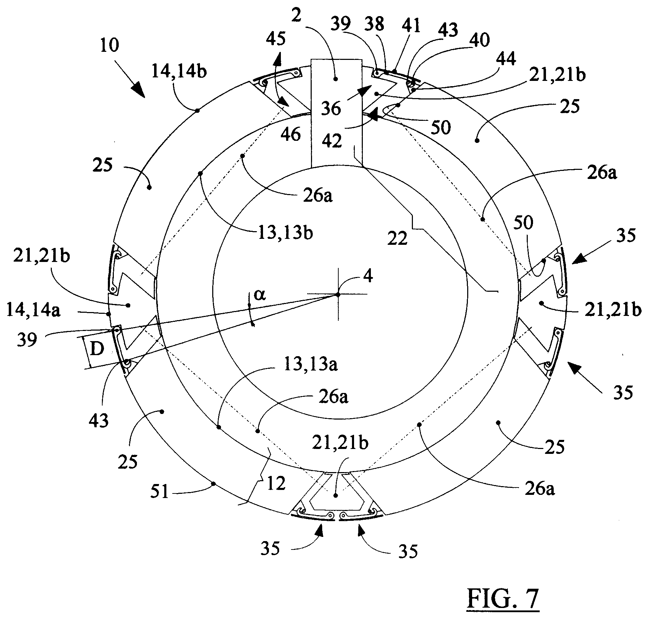

On se reportera maintenant à la figure 7, l'inverseur 10 étant vu en coupe transversale selon la circonférence géométrique référencée 51 sur la figure 5. Les poutres 21 longitudinales constituant la structure fixe apparaissent en coupe transversale et sont référencées 21b. L'inverseur 10 comporte dans cet exemple quatre obturateurs 25 pivotants selon les axes géométriques 26a des pivots référencés 26 sur les figures 2 à 4, ces axes géométriques 26a étant bien évidemment dans un plan différent de celui de cette figure 7.

Chaque obturateur 25 est verrouillé sur chacun de ses deux flancs 50 par un système de verrouillage 35 qui est disposé contre la paroi extérieur 14 à l'intérieur de la structure annulaire 12. Ces huit systèmes de verrouillage de secours 35 sont symétriques.

Le rapport D/H précédemment défini est voisin de 5. Ainsi, en cas de déverrouillage accidentel des obturateurs 25, de déformation ou de rupture dans la structure annulaire 12, soit dans la structure fixe 20 soit dans un obturateur 25, une liaison mécanique continue se forme sur la paroi extérieure 14 selon la circonférence géométrique 51 par la coopération de la paroi extérieure 14b des obturateurs 25, de la paroi extérieure 14a de la structure fixe, et des systèmes de verrouillages 35, cette liaison agissant à la façon d'un cerclage pour maintenir la cohésion de l'inverseur 10. Afin que l'effort ainsi repris par la paroi extérieure 14 soit sensiblement tangent & ladite paroi extérieure 14, et donc afin de réduire le moment de flexion et la composante normale à la paroi 14 desdits efforts, l'angle α définit par l'articulation 39 du pêne 38, l'axe géométrique 4 et l'interface de verrouillage 43 ne devrait pas être supérieur à 15°. Dans 1e présent exemple, l'angle α est sensiblement égal à 8°.

On se reportera maintenant à la figure 8. Les moyens d'actionnement à l'ouverture 48 des pênes 38 sont synchronisés pour l'ensemble des systèmes de verrouillage de secours, dont ne sont représentés dans les figures 8 à 11 que les pênes 38. Ces moyens d'actionnement à l'ouverture 48 comportent un vérin hydraulique 55 par pêne 38, chaque vérin 55 étant du côté de la fermeture 46 du pêne 38, le piston 56 de chaque vérin 55 étant relié par une tige 57 et une articulation 58 à un pêne 38, un circuit hydraulique 59 commun alimentant chaque vérin 55 du côté 56a du piston 56 opposé au pêne 38 et permettant aussi de repousser le pêne 38 dans le sens de l'ouverture 45. Les moyens élastiques de rappel automatique 47 sont constitués par un ressort hélicoïdal en compression à l'intérieur de chaque vérin 55, ledit ressort 47 agissant sur la face 56b du piston 56 tournée vers le pêne 38 et permettant de tirer automatiquement le pêne 38 dans le sens de la fermeture 46 par l'intermédiaire du piston 56, de la tige 57 et de l'articulation 58 reliant la tige 57 au pêne 38, ceci dès que la pression du fluide dans le circuit hydraulique 59 sera tombée. En d'autres termes, le ressort 47 a un effet antagoniste à celui du fluide du circuit hydraulique 59. Cette disposition présente l'avantage d'être simple et de regrouper en un seul mécanisme les moyens d'actionnement à l'ouverture et à la fermeture.

On se reportera maintenant à la figure 9. Les systèmes de verrouillage de secours 60 et 61 sont sur une même poutre longitudinale référencée 21b sur la figure 7 et les systèmes de verrouillage de secours 61 et 62 agissent sur le même obturateur référencé 25 sur cette même figure 7. Afin de suppléer à la défaillance d'un élément de moyen élastiques de rappel automatique 47 ou des moyens d'actionnement à l'ouverture 48, la commande des systèmes de verrouillage de secours 60, 61 et 62 est rendu redondante par l'ajout de moyens d'entraînement mécaniques supplémentaires reliant entre eux les pênes 38 et permettant d'actionner le système de verrouillage de secours défaillant à partir du mouvement d'au moins un des deux systèmes de verrouillage de secours voisins. Ainsi, deux systèmes de verrouillage de secours 60, 61 sur une même poutre longitudinale seront couplés par un moyens d'entraînement supplémentaire 63 qui peut par exemple être une biellette 63 articulée sur chacun des pênes 38. Egalement deux systèmes de verrouillage de secours 61, 62 agissant sur un même obturateur seront couplés par un moyen d'entraînement supplémentaire 64. Dans une première forme de réalisation, les pênes 38 sont chacun solidaires d'un arbre intérieur 65 pivotant et assurant la fonction de l'articulation 39, lesdits arbres pivotants 65 se prolongeant jusqu'au cadre avant où ils sont couplés par l'intermédiaire d'une tringle 64. Dans un mode de réalisation préféré, les moyens d'entraînement supplémentaires 64 seront constitués par un câble à billes.

On se reportera maintenant à la figure 10. Dans cet exemple, un seul vérin 55 commande deux systèmes de verrouillage de secours 60, 61 sur une même poutre longitudinale par l'intermédiaire de deux biellettes 63a, 63b.

On se reportera maintenant à la figure 11. Dans cet exemple, un seul vérin 55 commande deux systèmes de verrouillage de secours 61, 62 agissant sur chacun des flancs d'un même obturateur par l'intermédiaire de deux moyens d'entraînement supplémentaires 64a, 64b.

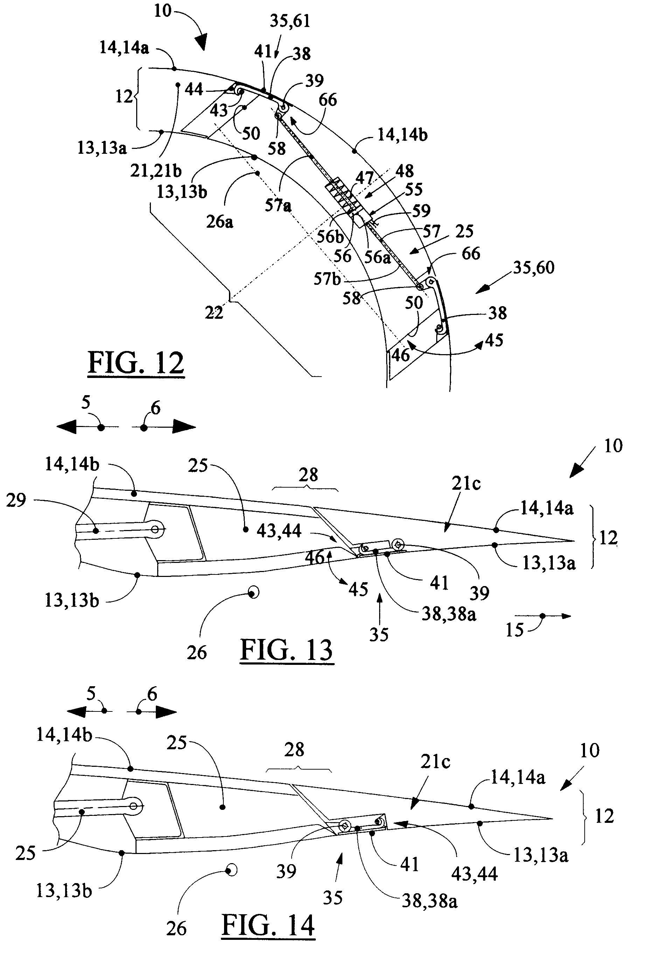

On se reportera maintenant à la figure 12. Dans cet exemple, un système de verrouillage de secours 35 relie chacun des deux flancs 50 d'un obturateur 25 avec les poutres longitudinales 21b adjacentes, les pênes 38 étant articulés sur les obturateurs 25, les pênes 38 étant disposés sensiblement selon une circonférence géométrique 51, deux pênes 38 articulés sur un même obturateur 25 étant commandé par un vérin unique 55 dont le piston 56 est relié à l'un des pênes 38 par une première tringle 57a et dont le corps non référencé est relié par une seconde tringle 57b à l'autre pêne 38, le vérin 55 et les tringles 57a et 57b étant logés dans l'obturateur 25. Cette disposition a pour avantage de n'utiliser qu'un vérin 55 pour deux systèmes de verrouillage de secours 35 relatif à un même obturateur 25, et d'utiliser le volume intérieur de l'obturateur 25 qui est habituellement vide.

On se reportera maintenant à la figure 13. Dans cet exemple, un système de verrouillage de secours 35 est disposé entre l'extrémité arrière 28 de l'obturateur 25 et le cadre arrière 21c, contre la paroi intérieure 13, le pêne 38 étant articulé sur le cadre arrière 21c et l'interface de verrouillage 43 étant disposée sur l'extrémité arrière 28 de l'obturateur 25. On comprend que lorsque le pêne est en position ouverte, il est en saillie de la paroi intérieure 13 et est bien visible depuis l'arrière 6 de l'inverseur 10.

On se reportera maintenant à la figure 14. Cet exemple est la réciproque du précédent, le pêne 38 étant articulé sur l'extrémité arrière 28 de l'obturateur 25, l'interface de verrouillage 43 étant elle-même disposée sur le cadre arrière 21c.

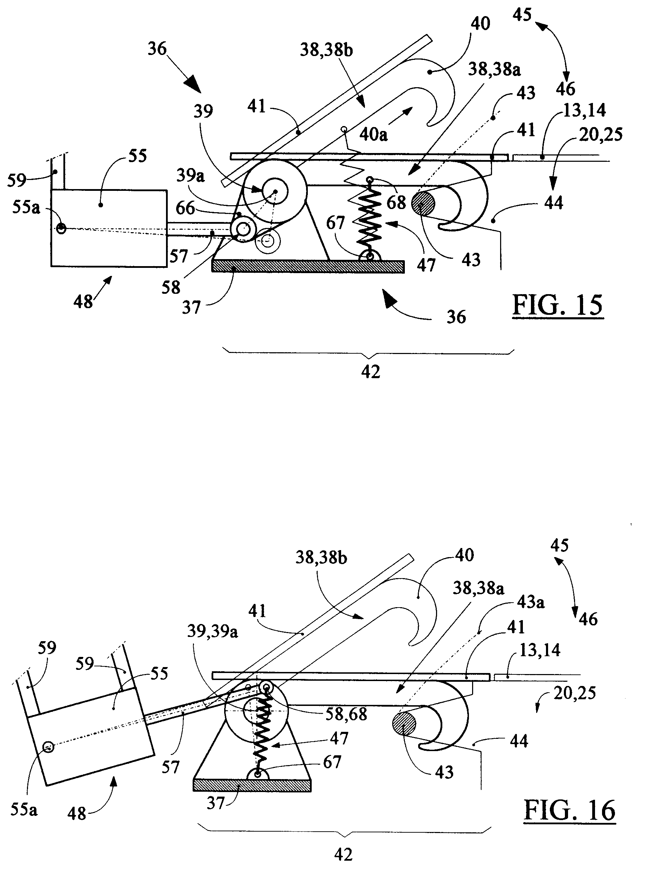

On se reportera maintenant à la figure 15. Le pêne 38 est représenté simultanément en position fermée 38a et en position ouverte 38b. Dans une forme de réalisation de l'invention, le pêne 38 est relié à une chape 37 par l'intermédiaire d'une articulation 39, et l'ouverture 40a du crochet 40, à l'extrémité du pêne 38 opposée à l'articulation 39, est tournée vers cette chape 37. Les moyens élastiques de rappel automatique 47 du pêne 38 à la fermeture sont constitués par un ressort hélicoïdal en traction dont une extrémité 67 et accrochée à la chape 37 et dont l'autre extrémité 68 est accroché au pêne 38. Lorsque le pêne 38 est fermé le cache 41 arrive en butée sur la partie 25, 20 de la structure annulaire 12 supportant l'interface de verrouillage 43 et se trouve dans l'alignement de la paroi 13, 14 délimitant radialement la structure annulaire 12. Les moyens d'actionnement à l'ouverture 48 du pêne 38 sont constitués par un vérin 55 poussant le pêne 38 à l'ouverture 45 par l'intermédiaire d'une tringle 57 reliée par une articulation 58 à un levier 66, ce levier étant solidaire du pêne 38 afin de pouvoir l'entraîner en rotation. Le vérin 55 est lui-même relié par une articulation 55a à la partie 20, 25 de la structure annulaire 12 supportant la chape 37, ou sur la chape 27 elle-même qui peut être prolongée à cet effet jusqu'au vérin 55. Le vérin 55, le levier 66 et le pêne 38 se déplacent dans un plan. En d'autres termes, l'articulation 55a du vérin 55 et l'articulation 58 reliant la tringle 57 au levier 66 sont parallèles à l'articulation 39 reliant le pêne 38 à la chape 37. On comprend que lorsque le vérin 55 est relâché, le ressort 47 tire le pêne 38 à la fermeture 46 jusqu'à ce qu'il arrive en butée contre la partie 25, 20 de la structure annulaire supportant l'interface de verrouillage 43. Le vérin 55 peut être hydraulique, et on maintiendra le verrou 36 ouvert en maintenant le vérin 55 sous pression. Le vérin 55 peut aussi être électrique. Dans ce cas, on maintiendra le verrou 36 ouvert soit en maintenant le vérin 55 sous tension, soit en utilisant un frein non référencé commandé électriquement, ce frein pouvant être interne au vérin 55.

On se reportera maintenant à la figure 16. Cet exemple est en tous points identique au précédant, à l'exception des éléments suivants : Les moyens élastiques de rappel automatique 47 constituent un système basculant tendant à actionner le pêne 38 à la fermeture 46 lorsqu'il approche de la position fermée 38a, ledit système basculant tendant à actionner le pêne 38 à l'ouverture 45 lorsqu'il approche de la position ouverte 38b. Le vérin 55 dans ce cas est à double action, c'est à dire capable d'actionner le pêne 38 à l'ouverture 45 où la fermeture 46. Avec une telle disposition, le verrou 36 se comporte comme précédemment lorsqu'il est fermé, mais reste ouvert par ses propres moyens, ce qui permet de relâcher le vérin 55 sans devoir utiliser un quelconque système de freinage. L'homme du métier réalisera simplement cet effet de bascule en positionnant les extrémités 67 et 68 du ressort 47 par rapport à l'axe géométrique 39a de l'articulation 39 reliant le pêne 38 à la chape 37. Dans l'exemple illustré par la figure 16, l'extrémité 68 du ressort 47 est accrochée à l'articulation 58 reliant la tringle 57 au pêne 38, la position de ladite articulation 58 ayant été adoptée à cet effet.

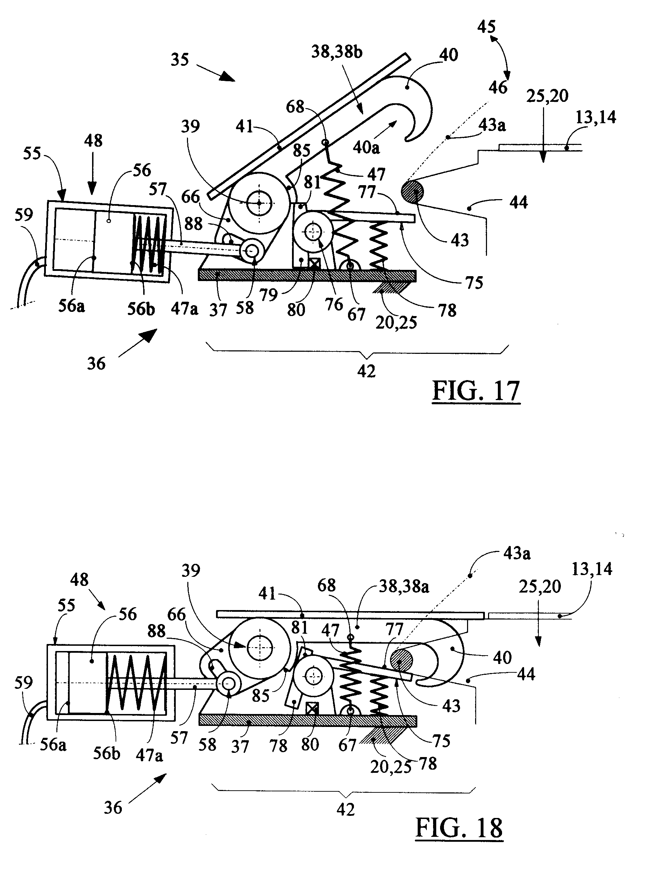

On se reportera maintenant simultanément aux figures 17 et 18 le verrou 36 étant ouvert dans la figure 17 et fermé dans la figure 18. Dans un mode de réalisation préféré, le verrou 36 est en tous points identique à celui des exemples précédents illustrés par les figures 14 ou 15, mais il comporte en outre les éléments suivants : Une gâchette 75 est reliée à la chape 37 par une articulation 76. Cette gâchette 75 présente une face d'appui 77 exposée à la pression de l'interface de verrouillage 43 lorsque l'obturateur 25 se referme, ladite gâchette 75 étant repoussée par un ressort 78 vers ladite interface de verrouillage 43 lorsque l'obturateur 25 se referme, ce qui a pour effet de la faire pivoter automatiquement vers cet interface de verrouillage 43 jusqu'à ce qu'elle arrive en butée, par exemple jusqu'à ce qu'un ergot 79 solidaire de la gâchette 75 arrive au contact d'une butée de positionnement 80 disposée sur la chape 37, la gâchette 75 s'immobilisant alors dans cette position d'attente. La gâchette 75 comporte aussi une butée escamotable 81 contre laquelle une contrebutée 85 solidaire du pêne 38 est susceptible de venir en appui lorsque la gâchette 75 est en position d'attente et lorsque le pêne 38 est ouvert et tiré par le ressort 47 à la fermeture 46, ce qui a pour effet de maintenir le pêne 38 ouvert. Enfin, le pêne 38 est actionné par un vérin 55 par l'intermédiaire d'un levier 66 solidaire du pêne 38, d'une tringle 57 solidaire du piston 56 du vérin 55, la tringle 57 étant liée au levier 66 par une articulation 58, le piston 56 recevant la pression du circuit hydraulique 59 par sa face 56a opposée au pêne 38 afin d'actionner ledit pêne 38 à l'ouverture, le piston 56 étant soumis par son autre face 56b à la poussée d'un ressort 47a complétant les moyens élastiques de rappel automatique 47 du pêne 38, l'articulation 58 reliant la tringle 57 au levier 66 comportant elle même un jeu produit par exemple par le coulissement de ladite articulation 58 dans un trou oblong 88 aménagé à l'extrémité du levier 66.

Le fonctionnement du système de verrouillage de secours 35 est le suivant, en partant de la position "armée" du verrou 36 : Lorsque le verrou 36 est "armé", la gâchette 75 est dans sa position d'attente illustrée par la figure 17, l'ergot 79 étant en appui contre la butée de positionnement 80, le pêne 38 étant dans sa position ouverte 38b avec sa contrebutée 85 en appui contre la butée escamotable 81 de la gâchette 75 sous l'effet de la traction du ressort 47.

La manoeuvre de fermeture est la suivante : Lorsque l'obturateur 25 se referme, l'interface de verrouillage 43 vient appuyer sur la gâchette 75, ce qui a pour effet de la faire pivoter et de déplacer la butée escamotable 81 qui s'écarte de la contrebutée 85 du pêne 38. Ceci a pour effet de libérer le pêne 38 qui se déplace alors dans le sens de la fermeture 46 sous l'action du ressort 47 et qui vient entourer partiellement l'interface de verrouillage 43 avec le crochet 40. Ce mouvement de fermeture automatique est facilité par le fait que le ressort 47a dans le vérin 55 avait déjà repoussé le piston 56 grâce à la présence du trou oblong 88 dans lequel peut coulisser l'articulation 58 reliant la tringle 57 au levier 66.

La manoeuvre d'ouverture est la suivante : Sous l'effet de la pression du circuit hydraulique 59, le piston 56 repousse le pêne 38 dans le sens de l'ouverture 45 au delà de sa position ouverte 38b. Lorsque l'obturateur 25 s'ouvre, l'interface de verrouillage 43 s'écarte de la gâchette 75 qui pivote vers sa position d'attente sous l'effet de la poussée du ressort 78. Dès que la pression du circuit hydraulique 59 tombe, le pêne 38 pivote dans le sens de la fermeture 46 jusqu'à ce que la contrebutée 85 sur le pêne 38 arrive au contact de la butée escamotable 81. Le verrou 36 est maintenant "armé" et ouvert et reste naturellement dans cet état tant que l'interface de verrouillage 43 ne vient pas appuyer sur la gâchette 75.

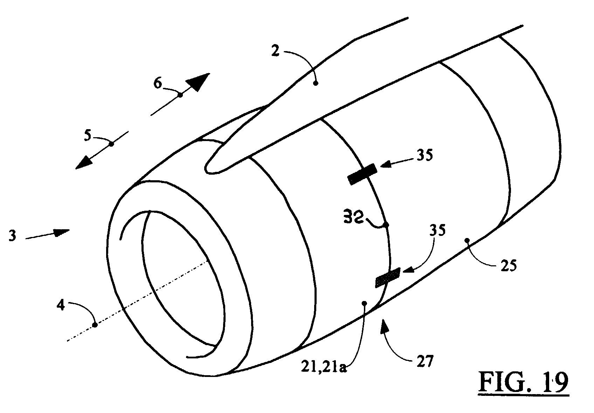

On se reportera maintenant à la figure 19. L'inverseur 10 du type "à grille" comporte un obturateur 25 annulaire représenté ici en position fermée et masquant de ce fait les ouvertures radiales référencées 22 sur les figure 3, 4, et 11, 12, 13. Au contraire des obturateurs 25 basculant précédemment illustrés, l'obturateur 25 s'ouvre dans cet exemple par une translation vers l'arrière 6 et se referme par une translation vers l'avant 5 jusqu'à ce qu'il arrive par sa partie avant 27 contre le cadre avant 21a où la sécurité du verrouillage est assurée par une pluralité de systèmes de verrouillage de secours 35 répartis au pourtour du cadre avant 21a et de 1'obturateur 25, les pênes non représentés étant sensiblement parallèles à l'axe géométrique 4 de la nacelle 3. Dans le cas où les systèmes de verrouillage de secours 35 sont à gâchette, selon l'exemple précédant illustré par les figures 16 et 17, il suffit de décaler la surface d'appui 77 de 90° pour que la gâchette 75 puisse déclencher la fermeture du pêne 38 alors que l'interface de verrouillage 43 suit dans ce cas une trajectoire 43a sensiblement parallèle au pêne.

La présente invention n'est pas limitée aux exemples de réalisation qui en ont été donnés mais en couvre au contraire toutes les variantes qui pourraient leur être apportées sans sortir de leur cadre ni de leur esprit. Ainsi :

Il est clair que le verrou 36 est habituellement disposé sur la structure fixe 20 ce qui simplifie d'une façon générale les moyens d'actionnement 48 du pêne 38 à l'ouverture, mais ce verrou 36 peut aussi être disposé sur l'obturateur 25 comme le montre les exemples illustrés par les figures 11 et 13.

Le système de verrouillage de secours 35 ne sont pas nécessairement disposés contre la paroi extérieure 14 délimitant radialement la structure annulaire 12 de l'inverseur 10, mais ils peuvent aussi être disposés contre la paroi intérieure 13. Cette disposition est même particulièrement favorable lorsque les systèmes de verrouillage de secours 35 sont disposés sur les flancs 50 des obturateurs 25 selon une circonférence géométrique 51 de cette paroi intérieure 13, car ladite paroi intérieure 13 reprendra mieux l'effort de rétention du fait de son rayon de courbure plus réduit.

De plus, l'ouverture 40a du crochet 40 peut être aussi tourné vers la paroi 13, 14 contre laquelle le système de verrouillage de secours 35 est disposé. Sans être obligatoire, cette disposition est plus particulièrement recommandée dans le cas de systèmes de verrouillage de secours 35 disposés sur la paroi extérieure 14 à la partie arrière 28 des obturateur basculants 25 par pivotement ou sur la paroi intérieure 13 à la partie avant 27 de ces mêmes obturateurs 25. Le pêne 38 en position ouverte 38a sera dans ce cas rendu visible de l'extérieur par le prolongement au delà de l'articulation 39 de son extrémité opposée au crochet 40.

Dans une variante de réalisation des moyens d'actionnement à l'ouverture 48, les vérins 55 peuvent être électriques, et comporter par exemple selon un type bien connu un moteur électrique entraînant en rotation une vis à billes, ladite vis à bille entraînant elle-même en translation un écrou équivalent au piston 56, ledit écrou étant relié à la tringle 57, ladite tringle 57 étant tubulaire et d'un diamètre suffisant pour laisser passer la vis à billes. Le ressort 47 est disposé de la même façon à l'intérieur du vérin et appuie sur l'écrou dans le sens de la fermeture. L'ensemble des vérins 55 est commandé par un circuit électrique équivalent au circuit hydraulique 59. De tels vérins électriques combinés aux ressorts 47 et au circuit électrique commun constituent une solution équivalente, car les moyens y assurent sensiblement les mêmes fonctions pour un résultat semblable

## Revendications

1. Inverseur de poussée pour aéronef à résistance améliorée aux impacts, ledit inverseur (10) comportant une structure annulaire (12) entourant le turbomoteur, ladite structure annulaire (12) comportant une première partie (20) ou structure fixe et au moins une seconde partie mobile (25) ou obturateur, ladite structure fixe (20) étant traversée radialement par au moins une ouverture radiale (22), ladite ouverture radiale (22) étant fermée par ledit obturateur (25), ledit obturateur étant maintenu fermé par des moyens de verrouillage principaux et par au moins un système de verrouillage de secours (35), ledit système de verrouillage de secours (35) comportant un verrou (36) solidaire d'une partie (20, 25) de la structure annulaire (12), ledit système de verrouillage de secours (35) comportant aussi une interface de verrouillage (43) solidaire de l'autre partie (25, 20) de la structure annulaire (12), ledit verrou (36) comportant un pêne (38) pivotant par une articulation (39), ledit pêne (38) coopérant avec ladite interface de verrouillage (43), ledit système de verrouillage de secours (35) comportant aussi des moyens d'actionnement (48) du pêne (38) à l'ouverture, caractérisé en ce que :
a) il comporte des moyens élastiques (47) rappelant automatiquement à la fermeture (46) les pênes (38) des systèmes de verrouillage de secours (35),
b) l'extrémité libre du pêne (38) comporte un crochet (40) dans un plan perpendiculaire à l'articulation (39) du pêne (38), l'interface de verrouillage (43) étant susceptible de passer par l'ouverture (40a) du crochet (40) lorsque le pêne (38) se referme alors que l'obturateur (25) correspondant est lui-même fermé,
c) le crochet (40) entoure partiellement l'interface de verrouillage (43) lorsque le pêne (38) est en position fermée (38a) alors que l'obturateur (25) correspondant est lui-même fermé,
afin de retenir par le pêne (38) l'interface de verrouillage (43), ceci quelque soit la direction dans laquelle ladite interface de verrouillage (43) tend à se déplacer dans un plan perpendiculaire à l'articulation (39) du pêne (38).

2. Inverseur selon la revendication 1, la ligne de démarcation entre le structure fixe (20) et l'obturateur (25) étant référencé (32), caractérisé en ce que l'articulation (39) du pêne (38) est sensiblement orthogonale à ladite ligne de démarcation (32) au voisinage dudit pêne (38), afin de s'opposer à l'écartement dudit obturateur (25) et de ladite structure fixe (20) à cet endroit.

3. Inverseur selon la revendication 1 ou 2, caractérisé en ce qu'un jeu E est laissé entre le crochet (40) et l'interface de verrouillage (43), afin de supprimer les frottements entre ledit crochet (40) et ladite interface de verrouillage (43) pendant l'action des moyens élastiques de rappel automatique (47) du pêne (38) à la fermeture.

4. Inverseur selon l'une quelconque des revendications 1 à 3, caractérisé en ce que l'interface de verrouillage (43) comporte un galet pivotant, afin de supprimer les frottements avec le crochet (40) lorsque ladite interface de verrouillage (43) tend à se déplacer.

5. Inverseur selon l'une quelconque des revendications 1 à 4, la structure annulaire (12) dudit inverseur (10) étant délimitée radialement par des parois (13, 14) caractérisé en ce que les systèmes de verrouillage de secours (35) sont disposés contre une desdites parois (13, 14) et en ce que l'articulation du pêne (38) et l'interface de verrouillage (43) de chaque système de verrouillage de secours (35) sont sensiblement équidistants de ladite paroi (13, 14), afin de faire reprendre l'effort de verrouillage par ladite paroi (13, 14) suivant une direction sensiblement tangente à ladite paroi (13, 14).

6. Inverseur selon la revendication 5, la distance entre l'articulation (39) du pêne (38) et l'interface de verrouillage (43) étant notée D et la distance de l'articulation (39) du pêne (38) et de l'interface de verrouillage (43) avec la fibre neutre de la paroi (13, 14) étant notée H, caractérisé en ce que le rapport D/H est au moins égal à trois afin de réduire le moment de flexion et la composante normale à la paroi (13,14) de l'effort imposé à ladite paroi (13, 14).

7. Inverseur selon la revendication 5 ou 6, caractérisé en ce que le pêne (38) en position ouverte (38a) émerge de la paroi (13, 14) de la structure annulaire (12), afin de rendre ledit pêne (38) visible dans cette position ouverte (38b) depuis l'extérieur.

8. Inverseur selon la revendication 7, caractérisé en ce que le pêne (38) en position fermée (38a) ne dépasse pas de la paroi (13, 14) de la structure annulaire (12) afin de masquer le pêne (38) dans cette position (38a).

9. Inverseur selon la revendication 8, caractérisé en ce que le pêne (38) est recouvert par un cache (41) et en ce que ledit cache (41) est dans l'alignement de la paroi (13, 14) lorsque le pêne (38) est en position fermée (38a), afin d'assurer la continuité aérodynamique de ladite paroi (13, 14).

10. Inverseur selon l'une quelconque des revendications 5 à 9, la structure annulaire (12) comportant une pluralité d'obturateurs basculants (25) traversés par au moins une circonférence géométrique (51) centrée sur l'axe géométrique (4) et inscrite dans un plan perpendiculaire audit axe géométrique (4), lesdits obturateurs (25) comportant chacun deux flancs (50), caractérisé en ce que au moins un système de verrouillage de secours (35) est disposé sur chacun des flancs (50) desdits obturateurs (25) et en ce que lesdits systèmes de verrouillage de secours (35) sont sensiblement alignés selon la circonférence géométrique (51), afin de former sur la paroi (13, 14) une liaison mécanique continue selon la circonférence (51).

11. Inverseur selon l'une quelconque des revendications 1 à 10, caractérisé en ce que chaque système de verrouillage de secours (35) est actionné à l'ouverture (45) par un vérin hydraulique (48) alimenté par un circuit hydraulique (59), et en ce que les moyens élastique de rappel automatique (47) sont constitués par un ressort interne au vérin hydraulique (48), ledit ressort (47) ayant un effet antagoniste à celui du fluide du circuit hydraulique (59).

12. Inverseur selon la revendication 11, caractérisé en ce que les vérins hydrauliques (48) sont alimentés par un circuit hydraulique commun (59) afin de synchroniser les mouvements des pênes (38) de l'inverseur (10).

13. Inverseur selon la revendication 12, les systèmes de verrouillage de secours (35) étant disposés sur les flancs (50) d'obturateurs (25) basculants, caractérisé en ce qu'il comporte des moyens d'entraînement mécaniques (63, 64, 65) reliant les pênes (38) entre eux, afin d'actionner un système de verrouillage de secours (35) défaillant à partir du mouvement d'au moins un système de verrouillage de secours (35) voisin.

14. Inverseur selon la revendication 12, les systèmes de verrouillage de secours (35) étant disposés sur les flancs (50) d'obturateurs (25) basculants, les pênes (38) étant articulés sur les obturateurs (25), caractérisé en ce que deux pênes (38) articulés sur un même obturateur (25) sont commandés par un vérin (48) unique dont le piston (56) est relié à l'un des pênes (38) et dont le corps est relié à l'autre pêne (38).

15. Inverseur selon l'une quelconque des revendications 1 à 14, caractérisé en ce que les verrous (36) comportent chacun une gâchette (75) maintenant le pêne (38) en position ouverte (38b), ladite gâchette (75) étant déclenchée par l'interface de verrouillage (43) lorsque l'obturateur (25) se referme, afin d'asservir la fermeture des verrous (36) à celle des obturateurs (25).
